# FASCICULE DE BREVET EUROPEEN

(11) **EP 2 694 781 B1**
(45) Date de publication et mention de la délivrance du brevet: **14.01.2015**
(21) Numéro de dépôt: 12717412.6
(22) Date de dépôt: 29.03.2012
(51) Int. Cl.: F01D 5/30, F01D 11/00, F01D 5/32

(54) **FLASQUE D'ETANCHEITE POUR ETAGE DE TURBINE DE TURBOMACHINE D'AERONEF, COMPRENANT DES TENONS ANTI-ROTATION FENDUS**
DICHTRING FÜR EINE TURBINENSTUFE EINER FLUGZEUGTURBOMASCHINE MIT GESCHLITZTEN DREHSCHUTZZAPFEN
SEALING RING FOR A TURBINE STAGE OF AN AIRCRAFT TURBOMACHINE, COMPRISING SLOTTED ANTI-ROTATION PEGS

(30) Priorité: 05.04.2011 FR 1152928
(43) Date de publication de la demande: 12.02.2014
(73) Titulaire: SNECMA, 75015 Paris (FR)
(72) Inventeur: POUZET, Emilie, F-77550 Moissy-Cramayel Cedex (FR); CASALIGGI, Pascal, F-77550 Moissy-Cramayel Cedex (FR); PASQUIET, Didier, F-77550 Moissy-Cramayel Cedex (FR)
(74) Mandataire: Ahner, Philippe
(86) Numéro de dépôt international: PCT/FR2012/050667
(87) Numéro de publication internationale: WO 2012/136917

(56) Documents cités:
- EP-A1- 1 439 282
- EP-A2- 1 096 107
- FR-A1- 2 393 931
- FR-A1- 2 913 064
- GB-A- 2 270 544

## Description

### DOMAINE TECHNIQUE

La présente invention se rapporte au domaine des turbines pour turbomachine d'aéronef, en particulier pour les turboréacteurs ou les turbopropulseurs d'avion.

L'invention concerne en particulier le flasque aval d'étanchéité d'un étage de turbine, destiné à contacter de manière étanche les aubes montées sur un disque de rotor de l'étage de turbine. Plus précisément, l'invention a trait aux tenons anti-rotation prévus sur ce flasque, et permettant le blocage en rotation de ce dernier par rapport au disque de rotor.

### ÉTAT DE LA TECHNIQUE ANTÉRIEURE

Le rotor d'un étage de turbine de turboréacteur d'avion comporte un disque, des aubes montées sur le disque à sa périphérie, et un flasque aval monté en aval de l'ensemble disque/aubes de turbine. De manière connue, le rotor est entraîné en rotation par l'écoulement d'un flux de gaz de l'amont vers l'aval à travers la turbine.

Pour le montage des aubes, le disque est pourvu de dents périphériques délimitant entre elles des alvéoles dans lesquelles les pieds des aubes sont retenus radialement.

De l'art antérieur, il est connu de monter le flasque aval d'étanchéité contre la face aval de l'ensemble disque/aubes, afin d'obtenir la meilleure étanchéité possible.

Le flasque est par ailleurs équipé d'une pluralité de tenons anti-rotation, par exemple trois tenons disposés à 120°, faisant saillie axialement à partir d'un corps de flasque. Ces tenons permettent de bloquer la rotation du flasque relativement au disque de rotor. Pour ce faire, chaque tenon présente deux surfaces opposées d'extrémité circonférentielle, respectivement destinées à se situer en regard de deux aubes directement consécutives portées par le disque de rotor. Ces surfaces constituent donc des butées tangentielles prévues pour entrer au contact des aubes, et interdire ainsi la rotation relative entre le flasque et l'ensemble disque/aubes (voir par exemple le document FR2393931).

En fonctionnement, les tenons subissent une contrainte tangentielle importante, en particulier en régime de rotation élevé. Les zones les plus critiques sont constituées par les rayons de raccordement entre les surfaces d'extrémité circonférentielle, et une surface de support de tenons prévue sur le corps de flasque. Ces deux rayons de raccordement sont effectivement de valeur très faibles, par exemple proches de 0,1 mm, et subissent une contrainte tangentielle très élevée, rendant ces rayons critiques en durée de vie du flasque.

Pour résoudre ce problème de contrainte impactant la durée de vie du flasque, il est possible d'augmenter la valeur des rayons de raccordement précités. Néanmoins, cette solution n'est pas satisfaisante car elle engendre des problèmes d'interférences avec le pied des deux aubes.

Une autre solution également envisagée consiste à réaliser des piqûres au niveau des deux rayons de raccordement, en créant des échancrures à la base des deux surfaces d'extrémité circonférentielle, afin de surmonter le problème d'interférences avec les pieds d'aubes. Cependant, ces piqûres diminuent la superficie des surfaces d'extrémité circonférentielle, et les rendent moins efficaces dans leur fonction de blocage en rotation. De plus, l'usinage de ces piqûres se révèle compliqué à mettre en oeuvre.

### EXPOSÉ DE L'INVENTION

L'invention a donc pour but de remédier au moins partiellement aux problèmes mentionnés ci-dessus, relatifs aux réalisations de l'art antérieur.

Pour ce faire, l'invention a tout d'abord pour objet un flasque d'étanchéité destiné à être plaqué contre un disque de rotor d'étage de turbine pour turbomachine d'aéronef, ledit flasque étant équipé d'une pluralité de tenons anti-rotation permettant de bloquer la rotation dudit flasque relativement au disque de rotor, chaque tenon étant en saillie axialement à partir d'un corps de flasque et présentant deux surfaces opposées d'extrémité circonférentielle, respectivement destinées à se situer en regard de deux aubes directement consécutives portées par le disque de rotor. Selon l'invention, au moins l'un desdits tenons anti-rotation est traversé radialement par une fente s'ouvrant axialement.

L'invention est donc remarquable en ce qu'elle constitue une solution simple, efficace et facile à mettre en oeuvre pour diminuer la contrainte tangentielle sur au moins l'un des tenons anti-rotation, et de préférence sur la totalité de ces tenons. La présence de la fente traversant le tenon anti-rotation permet en effet de scinder ce dernier en deux demi-tenons présentant chacun une plus faible raideur, qui leur confère donc une plus grande capacité de déformation sous contrainte, s'accompagnant d'une baisse de la contrainte tangentielle à laquelle ils sont soumis. A cet égard, il a été constaté que la contrainte tangentielle maximale, observée au niveau des rayons de raccordement des surfaces d'extrémité tangentielle, peut être diminuée d'au moins 20% grâce à la simple présence de la fente spécifique à la présente invention.

L'invention est particulièrement avantageuse en ce qu'elle apporte une solution ne nécessitant pas de modifier la valeur des rayons de raccordement précités, établie pour obtenir une coopération satisfaisante entre les tenons et les pieds d'aubes, sans interférences. Cette solution n'engendre pas non plus de diminution de la longueur axiale des surfaces d'extrémité tangentielle, de sorte que celles-ci peuvent remplir leur fonction de butée circonférentielle de manière satisfaisante.

L'invention est également avantageuse en ce qu'elle peut être mise en oeuvre sur des flasques existants, simplement en créant des fentes sur leurs tenons anti-rotation, de préférence par usinage.

Il est noté que le flasque selon l'invention est préférentiellement destiné à constituer un flasque aval d'étanchéité pour rotor d'étage de turbine, mais qu'il pourrait éventuellement être utilisé en tant que flasque amont, sans sortir du cadre de l'invention.

De préférence, chacune des deux surfaces opposées d'extrémité circonférentielle est reliée à une surface de support de tenons, prévue sur le corps de flasque, par un premier rayon de raccordement. De plus, chacun des deux flancs latéraux de la fente est relié au fond de cette fente par un second rayon de raccordement, et il est fait en sorte que le second rayon soit strictement supérieur au premier rayon de raccordement. De cette manière, le second rayon de raccordement est soumis à une contrainte tangentielle encore plus faible que celle s'appliquant sur le premier rayon de raccordement. Aucun élément environnant n'étant normalement prévu pour coopérer directement avec la fente, le second rayon de raccordement n'est donc pas sujet à des problèmes d'interférences.

Le rapport entre les deux rayons de raccordement est de préférence supérieur à huit, et peut aller au-delà de dix.

Afin d'augmenter encore davantage l'efficacité de déchargement de contrainte procurée par la fente, il est de préférence fait en sorte que le fond de la fente de chaque tenon se situe axialement au même niveau ou à proximité de la base dudit tenon.

Par ailleurs, pour un compromis totalement optimisé en termes d'efficacité de déchargement de contrainte, de masse globale, et de résistance mécanique des demi-tenons séparés par la fente, en particulier pour ce qui concerne la résistance en cisaillement, il est prévu que le rapport entre la largeur de la fente et la largeur totale dudit tenon anti-rotation, selon la direction circonférentielle, soit de préférence compris entre 0,3 et 0,4.

De préférence, la fente est centrée sur ledit tenon anti-rotation. Alternativement, elle pourrait être décalée vers l'une ou l'autre des surfaces d'extrémité circonférentielle, sans sortir du cadre de l'invention.

De préférence, le flasque présente trois tenons anti-rotation agencés à 120° les uns par rapport aux autres.

Enfin, lesdits tenons anti-rotation sont de préférence agencés à proximité d'une extrémité radiale externe dudit corps de flasque, même s'il pourrait en être autrement, sans sortir du cadre de l'invention.

L'invention a également pour objet un rotor d'étage de turbine de turbomachine d'aéronef, comprenant un disque, des aubes montées sur le disque, et un flasque aval d'étanchéité tel que décrit ci-dessus, monté en aval du disque et des aubes.

L'invention a pour objet une turbomachine pour aéronef, comprenant au moins une telle turbine comportant au moins un rotor d'étage de turbine tel que décrit ci-dessus.

Enfin, l'invention a également pour objet un procédé de fabrication d'un flasque d'étanchéité tel que décrit ci-dessus, dans lequel la fente dudit tenon anti-rotation est réalisée par usinage.

D'autres avantages et caractéristiques de l'invention apparaîtront dans la description détaillée non limitative ci-dessous.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle en coupe axiale d'un turboréacteur d'aéronef comprenant une turbine haute pression selon un mode de réalisation préféré de la présente invention ;
- la figure 2 est une vue partielle en perspective du rotor d'un étage de la turbine haute pression montrée sur la figure précédente ;
- la figure 3 est une demi-vue schématique partielle en coupe axiale du rotor montré sur la figure précédente ;
- la figure 4 est une vue en perspective de l'une des aubes de turbine du rotor montrées sur les figures 2 et 3 ;
- la figure 5 représente une vue similaire à celle de la figure 2, montrant de manière plus précise l'un des tenons anti-rotation du flasque aval ;
- la figure 6 représente également une vue partielle en perspective du flasque aval et de l'un de ses tenons anti-rotation ; et
- la figure 7 représente une vue en coupe du tenon anti-rotation montré sur la figure précédente, prise le long de la ligne A-A de cette figure 6 ;

Sur ces figures, des éléments identiques ou semblables sont désignés par des références numériques identiques.

### EXPOSÉ DÉTAILLÉ D'UN MODE DE RÉALISATION PREFERE

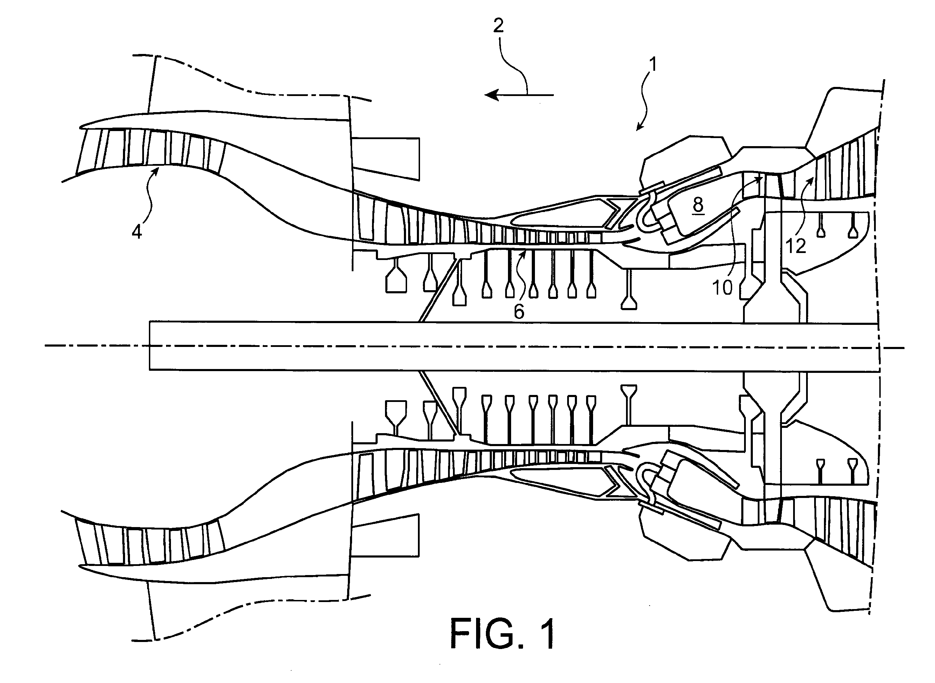

En référence tout d'abord à la figure 1, on peut apercevoir un turboréacteur d'aéronef 1, du type à double flux et à double corps.

Le turboréacteur comprend, successivement selon la direction de poussée représentée par la flèche 2, un compresseur basse pression 4, un compresseur haute pression 6, une chambre de combustion 8, une turbine haute pression 10 et une turbine basse pression 12.

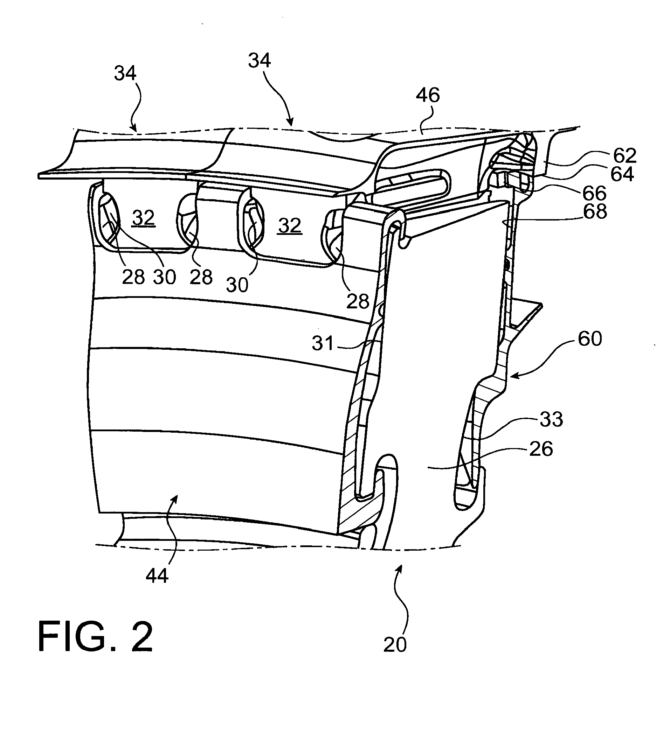

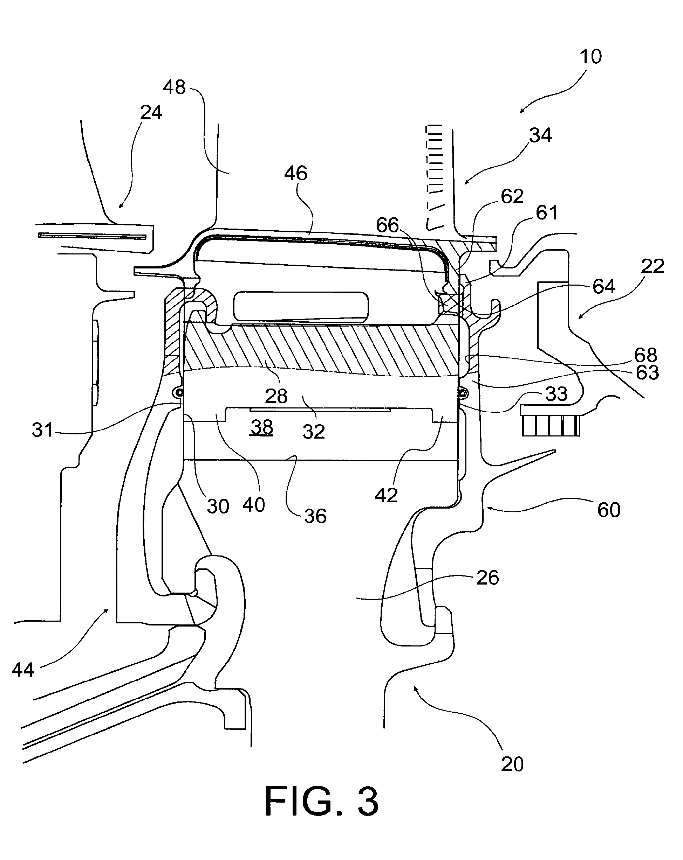

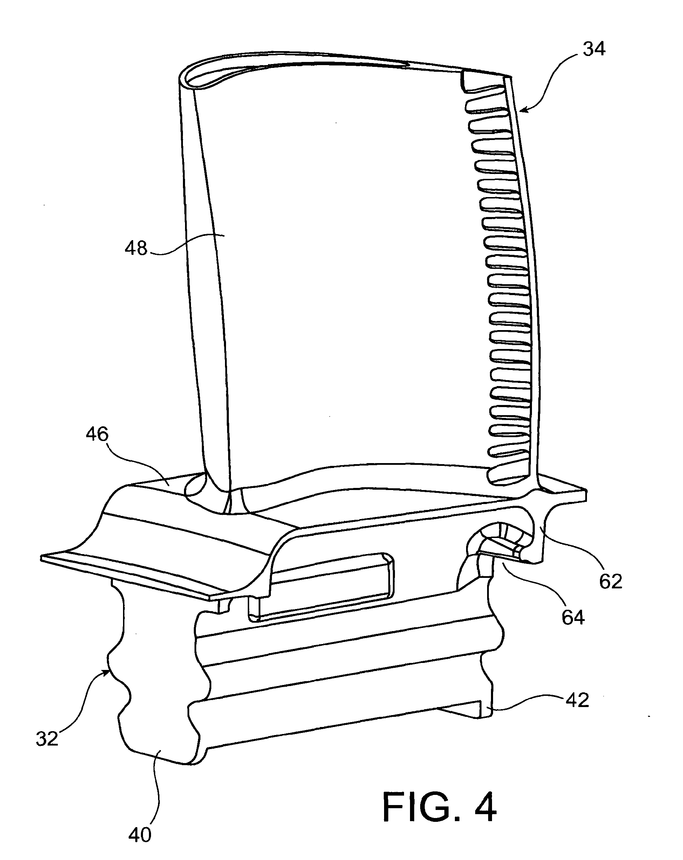

La turbine haute pression 10, du type mono-étage, se présente sous la forme d'un mode de réalisation préféré de la présente invention, qui va à présent être détaillé en référence aux figures 2 à 7.

La turbine comporte un rotor d'étage 20 qui se situe en aval d'un distributeur haute pression 24, appartenant à l'étage précédent. En aval du rotor 20 se situe une partie fixe 22 du turboréacteur, correspondant à l'entrée de la turbine basse pression.

Tout d'abord, le rotor 20 comporte un disque 26 dont la périphérie radialement externe présente des dents 28 espacées circonférentiellement les unes des autres. Des alvéoles 30 sont définies entre les dents du disque. Elles sont axiales ou obliques, ouvertes à la fois sur la face amont 31 et sur la face aval 33 du disque 26. De manière conventionnelle, chaque alvéole 30 reçoit le pied 32 d'une aube 34, afin de la retenir radialement vers l'extérieur, par coopération de forme.

Le pied 32 de chaque aube 34 se situe à distance du fond 36 de son alvéole associée 30, selon la direction radiale. Ainsi, il est formé un espace libre 38 entre l'extrémité du pied 32 et le fond d'alvéole 36.

A l'amont, le pied 32 peut éventuellement se prolonger radialement vers l'intérieur par un premier muret 40, de même qu'à l'aval, le pied 32 se prolonge radialement vers l'intérieur par un second muret 42.

En outre, chaque aube 34 comporte à sa base une plateforme 46 destinée notamment à guider l'écoulement de l'amont vers l'aval dans la turbine, c'est-à-dire de l'entrée vers la sortie de la turbine, d'un flux primaire de gaz provenant de la chambre de combustion. Cette plateforme 46, agencée entre le pied 32 et la pale aérodynamique 48 de l'aube, s'étend circonférentiellement de part et d'autre de cette pale 48. Elle se situe classiquement dans le prolongement d'une plateforme identique appartenant à une aube directement consécutive, comme cela est visible sur la figure 2.

Le rotor 20 intègre un flasque amont d'étanchéité 44 porté par le disque 26 au niveau de la face amont 31 de celui-ci. Le flasque amont 44 participe notamment à la rétention axiale des aubes dans les alvéoles, vers l'avant.

Le rotor 20 intègre également un flasque aval d'étanchéité 60 porté par le disque 26 au niveau de la face aval 33 de celui-ci. Le flasque annulaire 60 présente une extrémité radiale externe en forme de rebord périphérique 61 destiné à être en appui contre une languette 62 de support aval de la plateforme 46, qui s'étend quant à lui sous la plateforme selon une longueur circonférentielle plus grande que celle du pied qui porte cette languette 62, cette longueur étant en revanche sensiblement identique à celle de la plateforme. Il se crée alors des espace libres 64 situés sous les languettes 62, délimités circonférentiellement par la partie supérieure des pieds d'aubes, et délimités radialement entre les languettes 62 et la face supérieure des dents de disque 28. Les espaces 64 sont traversés axialement par des tenons 66 faisant saillie axialement vers l'amont à partir d'une face amont 68 du flasque aval, prenant localement la forme d'une surface de support de ces tenons. Il est de préférence prévu trois tenons 66, répartis à 120° sur le corps de flasque duquel ils font saillie, à partir de la surface de support 68 sensiblement orientée selon un plan transversal. Ces tenons 66 permettent de conférer une fonction anti-rotation au flasque aval, par rapport à l'ensemble disque/aubes. Ils se situent à proximité du rebord périphérique 61 du flasque, en étant agencés radialement vers l'intérieur par rapport à ce rebord 61 faisant également saillie axialement vers l'amont.

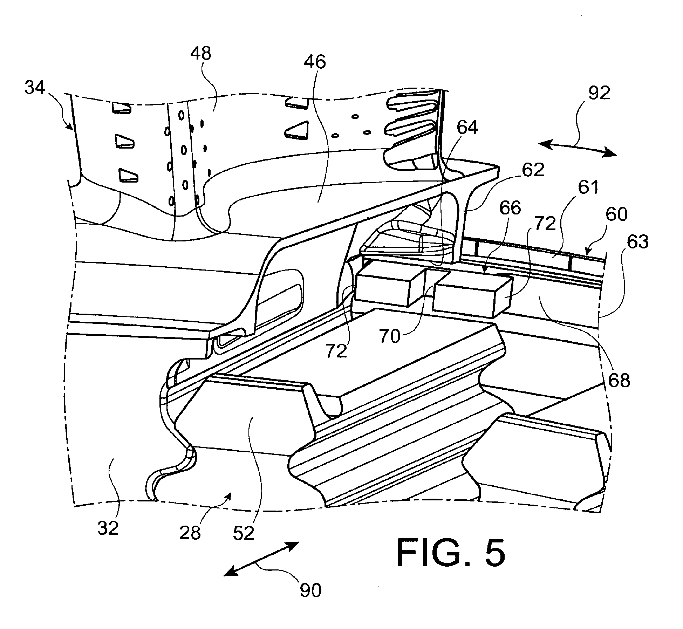

L'une des particularités de la présente invention réside dans la conception des tenons anti-rotation 66, dont un mode de réalisation préféré va à présent être décrit, essentiellement en référence aux figures 5 à 7.

Chaque tenon 66 présente deux surfaces opposées d'extrémité circonférentielle 72, respectivement destinées à se situer en regard de deux pieds d'aubes 34 directement consécutives. Les deux surfaces 72, en regard de surfaces complémentaires prévues sur les pieds d'aubes, servent à bloquer la rotation relative entre le flasque 60 et l'ensemble disque/aubes, selon l'axe de rotation de cet ensemble. Un jeu de montage est néanmoins prévu entre ces surfaces coopérant deux à deux, et sensiblement orientées parallèlement aux directions axiale 90 et circonférentielle 92. Les surfaces 72, servant de butées, sont aussi sensiblement orthogonales à la surface de support de tenons 68, de laquelle elles font saillie.

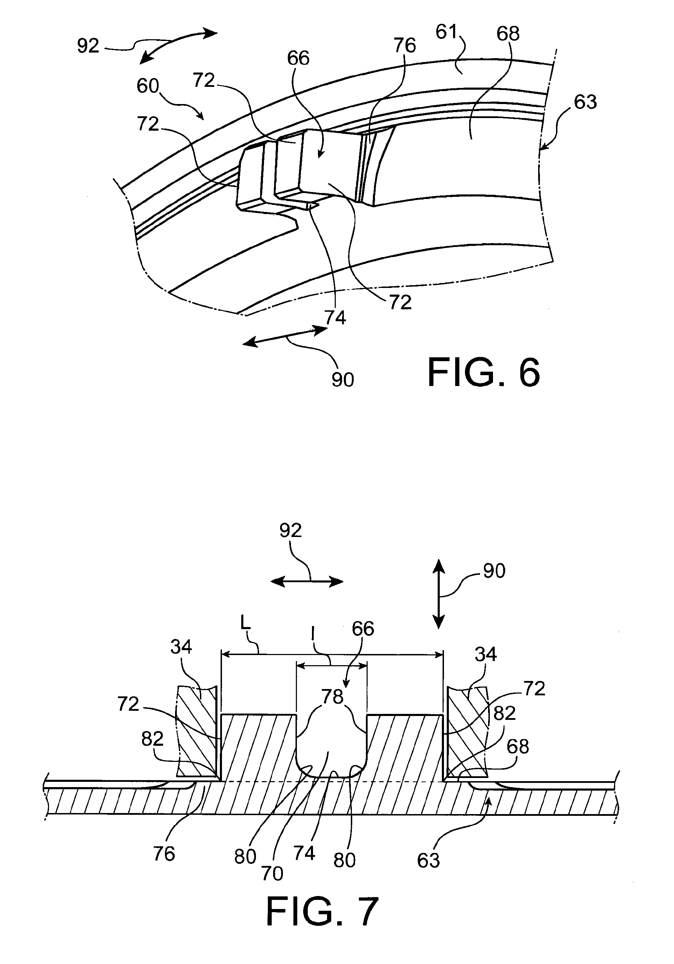

Par ailleurs, chaque tenon 66 est traversé radialement par une fente 70, qui débouche donc radialement vers l'intérieur et vers l'extérieur, et qui s'ouvre axialement vers l'amont. A cet égard, la fente 70 présente ici une forme préférentielle de section en forme générale de U, comme cela est le mieux visible sur la figure 7. D'autres formes pourraient néanmoins être adoptées, sans sortir du cadre de l'invention.

La fente 70, dont le fond 74 est orienté axialement en direction de l'amont, délimite alors deux demi-tenons espacés circonférentiellement l'un de l'autre. Le fond 74 se situe sensiblement au même niveau, selon la direction axiale 90, que la surface 68 de support des tenons, et donc sensiblement au même niveau que la base de son tenon associé 66, comme visible sur la figure 7. A cet égard, sur les figures 6 et 7, il est possible d'apercevoir que la surface de support de tenons 68 peut présenter, pour des raisons de fabrication, en particulier d'usinage des tenons sur le flasque réalisé d'une seule pièce, des marches axiales 76 en saillie vers l'amont, portant chacune un tenon 66. Dans un tel cas, le fond de fente 74 se situe alors sensiblement au même niveau axial que la marche 76 de la surface 68 de support des tenons.

La fente 70, préférentiellement centrée sur le tenon, présente donc une section en forme de U dont les deux flancs latéraux 78 sont reliés au fond 74 respectivement par deux rayons de raccordement 80, de préférence identiques, par exemple d'une valeur de l'ordre de 1 mm.

Ces rayons 80 sont élevés en comparaison des rayons de raccordement 82 entre les surfaces de butée 72 et la surface de support de tenons 68. Ces rayons, de préférence également identiques, ont par exemple une valeur de l'ordre de 0,1 mm, tout à fait adaptée pour amener le tenon 66 au plus près des pieds d'aubes, sans interférences.

Enfin, la fente 66 présente une largeur circonférentielle « l » comprise entre 0,3 et 0,4 fois la largeur totale « L » du tenon, selon cette même direction circonférentielle 92. Plus préférentiellement, le rapport entre les largeurs « l » et « L » est d'un tiers.

Bien entendu, diverses modifications peuvent être apportées par l'homme du métier à l'invention qui vient d'être décrite, uniquement à titre d'exemples non limitatifs.

## Revendications

1. Flasque d'étanchéité (60) destiné à être plaqué contre un disque de rotor (20) d'étage de turbine (10) pour turbomachine d'aéronef, ledit flasque étant équipé d'une pluralité de tenons anti-rotation (66) permettant de bloquer la rotation dudit flasque relativement au disque de rotor, chaque tenon (66) étant en saillie axialement à partir d'un corps de flasque (63) et présentant deux surfaces opposées d'extrémité circonférentielle (72), respectivement destinées à se situer en regard de deux aubes directement consécutives portées par le disque de rotor, **caractérisé en ce qu'**au moins l'un desdits tenons anti-rotation (66) est traversé radialement par une fente (70) s'ouvrant axialement.

2. Flasque selon la revendication 1, **caractérisé en ce que** chacune des deux surfaces opposées d'extrémité circonférentielle (72) est reliée à une surface de support de tenons (68), prévue sur le corps de flasque (63), par un premier rayon de raccordement (82), **en ce que** chacun des deux flancs latéraux (78) de la fente est relié au fond (74) de cette fente par un second rayon de raccordement (80), et **en ce que** le second rayon de raccordement (80) est strictement supérieur au premier rayon de raccordement (82).

3. Flasque selon la revendication 1 ou la revendication 2, **caractérisé en ce que** le fond (74) de la fente (70) de chaque tenon (66) se situe axialement au même niveau ou à proximité de la base dudit tenon.

4. Flasque selon l'une quelconque des revendications précédentes, **caractérisé en ce que** le rapport entre la largeur (l) de la fente (70) et la largeur totale (L) dudit tenon anti-rotation (66), selon la direction circonférentielle (92), est compris entre 0,3 et 0,4.

5. Flasque selon l'une quelconque des revendications précédentes, **caractérisé en ce que** la fente (70) est centrée sur ledit tenon anti-rotation (66).

6. Flasque selon l'une quelconque des revendications précédentes, **caractérisé en ce qu'**il présente trois tenons anti-rotation (66) agencés à 120° les uns par rapport aux autres.

7. Flasque selon l'une quelconque des revendications précédentes, **caractérisé en ce que** lesdits tenons anti-rotation (66) sont agencés à proximité d'une extrémité radiale externe (61) dudit corps de flasque (63).

8. Rotor (20) d'étage de turbine (10) de turbomachine d'aéronef, comprenant un disque (26), des aubes (34) montées sur le disque, et un flasque aval d'étanchéité (60) selon l'une quelconque des revendications précédentes.

9. Turbomachine (1) pour aéronef, **caractérisée en ce qu'**elle comprend au moins une turbine (10) comportant au moins un rotor (20) d'étage de turbine selon la revendication 8.

10. Procédé de fabrication d'un flasque d'étanchéité (60) selon l'une quelconque des revendications 1 à 7, **caractérisé en ce que** la fente (70) dudit tenon anti-rotation (60) est réalisée par usinage.

## Patentansprüche

1. Dichtungsflansch (60), der gegen eine Rotorscheibe (20) einer Turbinenstufe (10) für eine Flugzeugturbomaschine gepresst wird, wobei der Flansch mit einer Vielzahl von Drehsicherungszapfen (66) ausgerüstet ist, die ein Blockieren der Drehung des Flansches bezüglich der Rotorscheibe ermöglichen, wobei jeder Zapfen (66) axial aus einem Flanschkörper (63) vorsteht und zwei gegenüber liegende Umfangsendflächen (72) aufweist, welche sich jeweils gegenüber zwei direkt aufeinanderfolgenden, von der Rotorscheibe getragenen Turbinenschaufeln befinden, **dadurch gekennzeichnet, dass** durch mindestens einen der Drehsicherungszapfen (66) radial ein sich axial öffnender Schlitz (70) verläuft.

2. Flansch gemäß Anspruch 1, **dadurch gekennzeichnet, dass** jede der beiden gegenüber liegenden Umfangsendflächen (72) über einen ersten Verbindungsbereich (82) mit einer auf dem Flanschkörper (63) vorgesehenen Zapfenauflagefläche (68) verbunden ist, dass jede der beiden Seitenflanken (78) des Schlitzes über einen zweiten Verbindungsbereich (80) mit dem Boden (74) dieses Schlitzes verbunden ist, und dass der zweite Verbindungsbereich (80) genau über dem ersten Verbindungsbereich (82) liegt.

3. Flansch gemäß Anspruch 1 oder Anspruch 2, **dadurch gekennzeichnet, dass** sich der Boden (74) des Schlitzes (70) jedes Zapfens (66) axial auf gleicher Höhe mit dem oder in der Nähe des Bodens dieses Zapfens befindet.

4. Flansch gemäß einem der vorhergehenden Ansprüche, **dadurch gekennzeichnet, dass** das Verhältnis zwischen der Breite (1) des Schlitzes (70) und der Gesamtbreite (L) des Drehsicherungszapfens (66) in der Umfangsrichtung (92) zwischen 0,3 und 0,4 liegt.

5. Flansch gemäß einem der vorhergehenden Ansprüche, **dadurch gekennzeichnet, dass** der Schlitz (70) auf dem Drehsicherungszapfen (66) mittig ausgerichtet ist.

6. Flansch gemäß einem der vorhergehenden Ansprüche, **dadurch gekennzeichnet, dass** er drei Drehsicherungszapfen (66) aufweist, die in einem Winkel von 120° zueinander angeordnet sind.

7. Flansch gemäß einem der vorhergehenden Ansprüche, **dadurch gekennzeichnet, dass** die Drehsicherungszapfen (66) in der Nähe eines äußeren radialen Endes (61) des Flanschkörpers (63) angeordnet sind.

8. Rotor (20) einer Turbinenstufe (10) einer Flugzeugturbomaschine, mit einer Scheibe (26), auf der Scheibe montierten Schaufeln (34) und einem stromabwärtigen Dichtungsflansch (60) gemäß einem der vorhergehenden Ansprüche.

9. Turbomaschine (1) für ein Flugzeug, **dadurch gekennzeichnet, dass** sie mindestens eine Turbine (10) mit mindestens einem Turbinenstufenrotor (20) gemäß Anspruch 8 umfasst.

10. Verfahren zur Herstellung eines Dichtungsflansches (60) gemäß einem der Ansprüche 1 bis 7, **dadurch gekennzeichnet, dass** der Schlitz (70) des Drehsicherungszapfens (60) durch spanabhebende Bearbeitung hergestellt wird.

## Claims

1. Sealing ring (60) intended to be pressed against a rotor disc (20) of a turbine stage (10) for an aircraft turbomachine, said ring being provided with a plurality of anti-rotation pegs (66) which prevent said ring from rotating in relation to the rotor disc, each peg (66) protruding axially from a ring body (63) and having two opposite circumferential-end surfaces (72), respectively intended to be located facing two directly consecutive blades carried on the rotor disc, **characterised in that** an axially opening slot (70) passes radially through at least one of said anti-rotation pegs (66).

2. Ring according to claim 1, **characterised in that** each of the two opposite circumferential-end surfaces (72) is connected to a support surface of pegs (68), provided on the ring body (63), by a first connecting radius (82), **in that** each of the two lateral flanks (78) of the slot is connected at the bottom (74) of this slot by a second connecting radius (80), and **in that** the second connecting radius (80) is strictly greater than the first connecting radius (82).

3. Ring according to claim 1 or claim 2, **characterised in that** the bottom (74) of the slot (70) of each peg (66) is located axially at the same level or in the vicinity of the base of said peg.

4. Ring as claimed in any preceding claim, **characterised in that** the ratio between the width (I) of the slot (70) and the total width (L) of said anti-rotation peg (66), according to the circumferential direction (92), is between 0.3 and 0.4.

5. Ring as claimed in any preceding claim, **characterised in that** the slot (70) is centred on said anti-rotation peg (66).

6. Ring as claimed in any preceding claim, **characterised in that** it has three anti-rotation pegs (66) arranged at 120° in relation to one another.

7. Ring as claimed in any preceding claim, **characterised in that** said anti-rotation pegs (66) are arranged in the vicinity of an external radial end (61) of said ring body (63).

8. Rotor (20) of a turbine stage (10) for an aircraft turbomachine, comprising a disc (26), blades (34) mounted on the disc, and a downstream sealing ring (60) as claimed in any preceding claim.

9. Turbomachine (1) for aircraft, **characterised in that** it comprises at least one turbine (10) comprising at least one rotor (20) of a turbine stage according to claim 8.

10. Method for manufacturing a sealing ring (60) according to any of claims 1 to 7, **characterised in that** the slot (70) of said anti-rotation peg (60) is carried out by machining.
